# EUROPÄISCHE PATENTSCHRIFT

(11) **EP 2 996 915 B1**
(45) Veröffentlichungstag und Bekanntmachung des Hinweises auf die Patenterteilung: **07.11.2018**
(21) Anmeldenummer: 14725387.6
(22) Anmeldetag: 05.05.2014
(51) Int. Cl.: B60T 13/74, B60T 8/40, B60T 13/575

(54) **ELEKTROMECHANISCHE BREMSVORRICHTUNG FÜR EIN BREMSSYSTEM UND BREMSSYSTEM FÜR EIN FAHRZEUG**
ELECTROMECHANICAL BRAKE DEVICE FOR A BRAKE SYSTEM AND BRAKE SYSTEM FOR A VEHICLE
DISPOSITIF DE FREINAGE ÉLECTROMAGNÉTIQUE D'UN SYSTÈME DE FREINAGE ET SYSTÈME DE FREINAGE D'UN VÉHICULE

(30) Priorität: 13.05.2013 DE 102013208672
(43) Veröffentlichungstag der Anmeldung: 23.03.2016
(73) Patentinhaber: Robert Bosch GmbH, 70442 Stuttgart (DE)
(72) Erfinder: EICHHORN, Thomas, 71701 Schwieberdingen (DE); FOITZIK, Bertram, 74360 Ilsfeld (DE); BUSSMANN, Otmar, 74232 Abstatt (DE); SEITZ, Stefan, 87448 Waltenhofen (DE); SCHLICHENMAIER, Andreas, 74336 Brackenheim-Meimsheim (DE); MAHNKOPF, Dirk, 71634 Eglosheim (DE)
(86) Internationale Anmeldenummer: PCT/EP2014/059112
(87) Internationale Veröffentlichungsnummer: WO 2014/184032

(56) Entgegenhaltungen:
- DE-A1-102004 050 103
- US-A1- 2011 248 557
- US-A1- 2011 297 493

## Beschreibung

Die Erfindung betrifft eine elektromechanische Bremsvorrichtung für ein Bremssystem mit einem Hauptbremszylinder. Des Weiteren betrifft die Erfindung ein Bremssystem für ein Fahrzeug.

### Stand der Technik

In der DE 20 2010 017 605 U1 sind ein Bremskraftverstärker, ein Verfahren und eine Vorrichtung zu dessen Betrieb beschrieben. Der Bremskraftverstärker ist als elektromechanischer Bremskraftverstärker ausgebildet. Der Bremskraftverstärker weist einen Elektromotor auf, welcher mittels eines Rotations-Translations-Umsetzungsgetriebes so mit einem Verstärkergehäuse des Bremskraftverstärkers verbunden ist, dass eine Rotationsbewegung eines Rotors des Elektromotors in eine Translationsbewegung des Verstärkergehäuses umwandelbar ist. Mittels der Translationsbewegung des Verstärkergehäuses ist eine Ausgangsstange derart mitverstellbar, dass ein Innendruck in mindestens einer Kammer eines an dem Bremskraftverstärker angeordneten Hauptbremszylinders steigerbar ist

US2011/297493 offenbart einen Bremskraftverstärker (Brake Booster) mit einem gummielastischen Übertragungselement (rubber-elastic transmission element 13) oder mit einem Federelement (spring element 20) zwischen der Ausgangsstange (output element 6) und dem Ventilkörper (booster body 9) ausgestattet.

DE 10 2004 050103 offenbart einen elektromechanischen Bremskraftverstärker mit Kontaktdämpfung.

US 2011/248557 offenbart eine Bremskraftverstärkervorrichtung mit einem Schließen des Kraftübertragungspfads von einer Eingangstange (14) zu einer Ausgangsstange (16) über eine aus mehreren Komponenten (26,34, 48) zusammengesetzte und an der Ausgangsstange (16) angebrachte mechanische Einrichtung.

### Offenbarung der Erfindung

Die Erfindung schafft eine elektromechanische Bremsvorrichtung für ein Bremssystem mit einem Hauptbremszylinder mit den Merkmalen des Anspruchs 1 und ein Bremssystem für ein Fahrzeug mit den Merkmalen des Anspruchs 11.

### Vorteile der Erfindung

Die vorliegende Erfindung ermöglicht eine elektromechanische Bremsvorrichtung, welche gegenüber herkömmlichen elektromechanischen Bremsvorrichtungen bei einem Auftreten von Druckspitzen in dem Hauptbremszylinder des Bremssystems eine deutlich reduzierte Steifigkeit aufweist. Insbesondere vereinigt die erfindungsgemäße elektromechanische Bremsvorrichtung die Vorteile einer guten Regelbarkeit aufgrund ihrer Ausstattung mit dem Elektromotor und einer niedrigen Steifigkeit bei einem Auftreten von Druckspitzen in dem Hauptbremszylinder. Die deutlich reduzierte Steifigkeit der elektromechanischen Bremsvorrichtung kann insbesondere zur Kompensation von einem Rückfördervolumen während einer ABS-Regelung genutzt werden. Somit kann ein aufkommendes Rückfördervolumen elastisch aufgenommen werden. Auf diese Weise ist sicherstellbar, dass bei einem Auftreten von Druckspitzen in dem Hauptbremszylinder keine Beschädigung der elektromechanischen Bremsvorrichtung, wie beispielsweise eine Beschädigung von Kunststoffzähnen des Getriebes oder einer weiteren Komponente der elektromechanischen Bremsvorrichtung, zu befürchten ist. Mittels der vorliegenden Erfindung ist somit eine elektromechanische Bremsvorrichtung mit einer gegenüber dem Stand der Technik gesteigerten Lebensdauer/Einsetzzeit realisierbar.

In einer vorteilhaften Ausführungsform der elektromechanischen liegen die (abzumildernden) Druckspitzen in dem Hauptbremszylinder, ab welchen die mindestens eine elastische Komponente komprimierbar ist, oberhalb von einem vorgegebenen (festlegbaren) Schwellwert und/oder entsprechen einer vorgegebenen (festlegbaren) Mindest-Drucksteigerung innerhalt eines vorgegebenen (festlegbaren) Zeitintervalls. Beispielsweise können die Druckspitzen in dem Hauptbremszylinder, ab welchen die mindestens eine elastische Komponente komprimierbar ist, oberhalb eines Schwellwerts von 80 bar liegen. Die Druckspitzen können vorzugsweise oberhalb eines Schwellwerts von 100 bar, insbesondere oberhalb eines Schwellwerts von 120 bar, ebenso oberhalb eines Schwellwerts von 150 bar, liegen. Für die Mindest-Drucksteigerung können Werte von 50bar, 80bar, 100 bar, 120 bar oder 150 bar verwendet werden. Das vorgegebene Zeitintervall kann zwischen 10 bis 100 ms dauern. Somit kann zum Charakterisieren von Druckspitzen nicht nur ein vorgegebenes Kraftniveau (bzw. Druckniveau), sondern auch eine in das Getriebe eingeleitete kinetische Energie (Kraft/Druck und zugehöriger Gradient) herangezogen werden. In beiden Fällen ist gewährleistet, dass die elektromechanische Bremsvorrichtung unterhalb des Aussteuerpunktes der elektromechanischen Bremsvorrichtung eine vorteilhaft hohe Steifigkeit aufweist, während die elektromechanische Bremsvorrichtung vor allem bei durch die Pulsationen der Pumpen bewirkten Druckspitzen während einer Rückförderung sich elastisch verhält. Die zum Charakterisieren der abzumildernden Druckspitzen herangezogenen Werte können je nach Auslegung des Aussteuerpunktes des Bremskraftverstärkers gewählt werden.

Die elektromechanische Bremsvorrichtung kann beispielsweise als automatische Einbremsvorrichtung und/oder Fremdkraftbremsvorrichtung ausgebildet sein. Eine derartige automatische Einbremsvorrichtung und/oder Fremdkraftbremsvorrichtung kann zum Reduzieren einer Geschwindigkeit eines damit ausgestatteten Fahrzeugs ohne eine Betätigung eines Bremsbetätigungselements, wie beispielsweise eines Bremspedals, durch einen Fahrer eingesetzt werden. Die elektromechanische Bremsvorrichtung kann somit für eine Vielzahl von vorteilhaften automatischen Einbremsvorrichtungen und/oder Fremdkraftbremsvorrichtungen genutzt werden.

In einer weiteren vorteilhaften Ausführungsform ist die elektromechanische Bremsvorrichtung als elektromechanischer Bremskraftverstärker ausgebildet. Ein derartiger elektromechanischer Bremskraftverstärker weist gegenüber einem Vakuumverstärker eine bessere Regelbarkeit der mittels des Bremskraftverstärkers bereitgestellten Unterstützungskraft auf. Zusätzlich weist der erfindungsgemäße elektromechanische Bremskraftverstärker bei einem Auftreten von Druckspitzen in dem Hauptbremszylinder eine vorteilhaft hohe Elastizität auf.

Beispielsweise kann mittels einer Komprimierung der mindestens einen elastischen Komponente während des Auftretens von Druckspitzen in dem Hauptbremszylinder eine Kraft derart auf eine Eingangsstange der elektromechanischen Bremsvorrichtung übertragbar sein, dass die Eingangsstange in eine von dem Hauptbremszylinder weg gerichtete Richtung verstellbar ist. Die auf diese Weise bewirkbare von dem Hauptbremszylinder weg gerichtete Verstellbewegung der Eingangsstange führt in der Regel dazu, dass der Fahrer kurzzeitig die auf ein an der Eingangsstange angebundenes Bremspedal ausgeübte Fahrerbremskraft reduziert. Eine derartige Reduzierung der Fahrerbremskraft wiederum führt zu einem Zurückfahren des Elektromotors, wodurch zusätzlich einer Beschädigung einer Komponente des elektromechanischen Bremskraftverstärkers entgegengewirkt wird.

In einer bevorzugten Ausführungsform umfasst die mindestens eine elastische Komponente eine zwischen einem Ventilkörper des elektromechanischen Bremskraftverstärkers und einem Ventilkörper des elektromechanischen Bremskraftverstärkers angeordnete Tellerfeder. Somit kann ein kostengünstiges Bauteil mit einem geringeren Einbauraumbedarf als die mindestens eine elastische Komponente verwendet werden.

Die Tellerfeder kann eine lineare Weg/Kraft-Federkonstante aufweisen. Als Alternative dazu kann die Tellerfeder auch eine progressive Weg/Kraft-Federkonstante aufweisen. Somit ist eine Vielzahl von verschiedenen Typen von Tellerfedern zum Realisieren der elektromechanischen Bremsvorrichtung einsetzbar.

In einer weiteren bevorzugten Ausführungsform umfasst die mindestens eine elastische Komponente eine Schiebehülse, in deren Innenöffnung der Ventilkörper des elektromechanischen Bremskraftverstärkers hineinragt. Außerdem kann sich die Schiebehülse an ihrer von der Ausgangsstange weg gerichteten Seite an einem Ring abstützen, wobei eine Verstellbewegung des Rings in eine zu der Ausgangsstange ausgerichteten Verstellrichtung mittels eines an dem Verstärkerkörper des elektromechanischen Bremskraftverstärkers befestigten Sicherungsrings begrenzt ist, und der Ring sich an seiner von der Ausgangsstange weg gerichteten Seite mittels einer vorgespannten Feder von dem Verstärkerkörper abstützt. Auch die hier beschriebene Ausführungsform ist auf einfache Weise mittels kostengünstiger Bauteile ausbildbar. Zusätzlich ist auch in diesem Fall die Ausbildung der mindestens einen elastischen Komponente mit keiner Steigerung des Bauraumbedarfs der elektromechanischen Bremsvorrichtung verbunden.

Die oben aufgezählten Vorteile sind auch bei einem Bremssystem für ein Fahrzeug mit einer entsprechenden elektromechanischen Bremsvorrichtung und einem Hauptbremszylinder gewährleistet.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer ersten Ausführungsform der elektromechanischen Bremsvorrichtung; und
- Fig. 2: eine schematische Darstellung einer zweiten Ausführungsform der elektromechanischen Bremsvorrichtung.

### Ausführungsformen der Erfindung

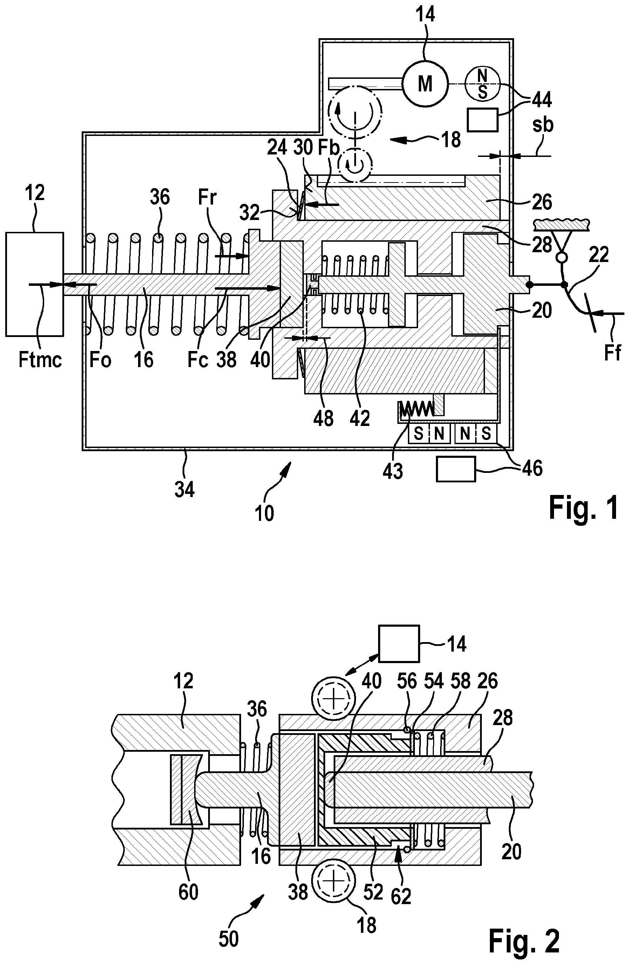

Fig. 1 zeigt eine schematische Darstellung einer ersten Ausführungsform der elektromechanischen Bremsvorrichtung.

Die in Fig. 1 schematisch dargestellte elektromechanische Bremsvorrichtung 10 ist zum Einsetzen in einem Bremssystem mit einem Hauptbremszylinder 12 ausgelegt. Dabei kann die elektromechanische Bremsvorrichtung 10 mit einer Vielzahl verschiedener Typen von Hauptbremszylindern 12 zusammenwirken. Z.B. kann der Hauptbremszylinder 12 ein Tandemhauptbremszylinder oder ein Hauptbremszylinder mit nur einer Druckkammer sein.

Die elektromechanische Bremsvorrichtung 10 hat einen Elektromotor 14. Da eine Vielzahl verschiedener Typen von Elektromotoren 14 für die elektromechanische Bremsvorrichtung 10 einsetzbar sind, wird auf den Elektromotor 14 der Ausführungsform der Fig. 1 nicht genauer eingegangen. Außerdem weist die elektromechanische Bremsvorrichtung 10 eine verstellbare Ausgangsstange 16 auf. Die Ausgangsstange 16 ist derart an dem Hauptbremszylinder 12 anordbar, dass mindestens ein (nicht dargestellter) Kolben des Hauptbremszylinders 12 mittels der verstellten Ausgangsstange 16 mitverstellbar ist. Auf diese Weise ist ein Volumen mindestens einer mittels des mindestens einen Kolbens begrenzten Kammer des Hauptbremszylinders 12 reduzierbar, wodurch ein in dem Hauptbremszylinder 12 vorliegender Innendruck steigerbar ist.

Der Elektromotor 14 stellt bis zu einem sogenannten Aussteuerpunkt der elektromechanischen Bremsvorrichtung 10 seine Motorkraft so bereit, dass mittels der auf die Ausgangstange 16 übertragenen Motorkraft der in der mindestens einen Kammer des Hauptbremszylinders 12 vorliegende Innendruck steigerbar ist. In der Ausführungsform der Fig. 1 ist die elektromechanische Bremsvorrichtung 10 als ein elektromechanischer Bremskraftverstärker 10 ausgebildet. Die Motorkraft des Elektromotors 14 kann somit als Unterstützungskraft Fb zum zusätzlichen Steigern des in der mindestens einen Kammer des Hauptbremszylinders 12 vorliegenden Innendrucks genutzt werden. Auf diese Weise ist der Fahrer bei einem Druckaufbau im Hauptbremszylinder 12 kraftmäßig unterstützbar.

Die elektromechanische Bremsvorrichtung 10 der Fig. 1 realisiert deshalb eine elektromechanische Bremskraftverstärkung. Insbesondere kann die elektromechanische Bremskraftverstärkung weggeregelt sein. Darunter kann verstanden werden, dass die Unterstützungskraft Fb/ein Soll-Drehwinkel (des Rotors) des Elektromotors 14 unter Berücksichtigung eines ermittelten Verstellwegs mindestens einer Fahrerbremskraftübertragungskomponente, wie beispielsweise einer Eingangsstange 20, von einer Steuerung der elektromechanischen Bremsvorrichtung 10 vorgegeben wird. Alternativ kann die von dem Rotor des Elektromotors 14 auszuführende Drehbewegung auch unter Berücksichtigung einer auf ein Bremsbetätigungselement 22, wie beispielsweise ein Bremspedal 22, ausgeübten Fahrerbremskraft Ff festgelegt werden. Es wird jedoch darauf hingewiesen, dass eine Auslegung der elektromechanischen Bremsvorrichtung 10 als elektromechanischer Bremskraftverstärker 10, insbesondere als einen bestimmten Typ eines elektromechanischen Bremskraftverstärkers 10, lediglich optional ist.

Die elektromechanische Bremsvorrichtung 10 umfasst außerdem noch zumindest ein Getriebe 18, wobei der Elektromotor 14 mit der Ausgangsstange 16 zumindest über das Getriebe 18 so verbunden ist, dass ein Kraftübertragungspfad vorliegt, über welchen eine von dem Elektromotor 14 aufgebrachte Motorkraft/Unterstützungskraft Fb zumindest teilweise auf die Ausgangsstange 16 übertragbar ist. Die Ausgangsstange 16 ist somit mittels der zumindest teilweise übertragenen Motorkraft/Unterstützungskraft Fb verstellbar. Das Getriebe 18 kann insbesondere als ein Rotations-Translations-Umsetzungsgetriebe umschreibbar sein, mittels welchem eine Rotationsbewegung eines Rotors des Elektromotors 14 in eine Translationsbewegung der Ausgangsstange 16 übersetzbar ist. Zusätzlich zu dem Getriebe 18 können weitere Komponenten der elektromechanischen Bremsvorrichtung noch zum Realisieren des gewünschten Kraftübertragungspfads eingesetzt werden, wie unten genauer beschrieben wird.

Die elektromechanische Bremsvorrichtung weist zusätzlich noch mindestens eine innerhalb des Kraftübertragungspfades angeordnete elastische Komponente 24 auf. Unter der mindestens einen elastischen Komponente 24 ist mindestens ein elastisches Bauteil zu verstehen, welches derart ausgebildet ist, dass die mindestens eine elastische Komponente 24 unterhalb des Aussteuerpunktes der elektromechanischen Bremsvorrichtung 10 nicht komprimierbar ist. Bei einem Auftreten von Druckspitzen in dem Hauptbremszylinder 12 oberhalb des Aussteuerpunktes der elektromechanischen Bremsvorrichtung 10 ist die mindestens eine elastische Komponente 24 jedoch komprimierbar. Diese Komprimierbarkeit der mindestens einen elastischen Komponente 24 bei Druckspitzen in dem Hauptbremszylinder 12 oberhalb des Aussteuerpunktes der elektromechanischen Bremsvorrichtung 10 bewirkt, dass eine sprunghafte/sprungförmige Erhöhung einer der Einbremsbewegung der Ausgangsstange 16 in dem Hauptbremszylinder 12 entgegenwirkende Hauptbremszylinderkraft Ftmc, welche andernfalls über die Ausgangsstange 16 zumindest teilweise auf das Getriebe 18 einwirken würde, abdämpfbar ist.

Auf diese Weise kann einer Beschädigung mindestens einer Komponente der elektromechanischen Bremsvorrichtung 10 aufgrund der sprunghaften Erhöhung der Hauptbremszylinderkraft Ftmc, insbesondere einer Beschädigung des Getriebes 18, verlässlich entgegengewirkt werden. Die mit der mindestens einen elastischen Komponente 24 ausgestattete elektromechanische Bremsvorrichtung 10 weist deshalb eine vergleichsweise lange Lebensdauer/Einsetzzeit auf, ohne dass deren Beschädigung aufgrund von Druckspitzen in dem Hauptbremszylinder 12 zu befürchten ist.

Die Druckspitzen in dem Hauptbremszylinder 12, ab welchem die mindestens eine elastische Komponente 24 komprimierbar ist, können oberhalb von einem vorgegebenen (festlegbaren) Schwellwert liegen und/oder einer vorgegebenen (festlegbaren) Mindest-Drucksteigerung innerhalt eines vorgegebenen (festlegbaren) Zeitintervalls entsprechen. Beispielsweise können die Druckspitzen in dem Hauptbremszylinder 12, ab welchen die mindestens eine elastische Komponente 24 komprimierbar ist, oberhalb eines Schwellwerts von 80 bar liegen. Die Druckspitzen können vorzugsweise oberhalb eines Schwellwerts von 100 bar, insbesondere oberhalb eines Schwellwerts von 120 bar, ebenso oberhalb eines Schwellwerts von 150 bar, liegen. Für die Mindest-Drucksteigerung können Werte von 50bar, 80bar, 100 bar, 120 bar oder 150 bar verwendet werden. Das vorgegebene Zeitintervall kann zwischen 10 bis 100 ms dauern. Der Schwellwert für die Druckspitzen in dem Hauptbremszylinder 12, ab welchem die mindestens eine elastische Komponente 24 komprimierbar ist, ist mittels einer baulichen Ausbildung der mindestens einen elastischen Komponente 24 auf einfache Weise und verlässlich festlegbar.

Somit kann zum Charakterisieren von Druckspitzen nicht nur ein vorgegebenes Kraftniveau (bzw. Druckniveau), sondern auch eine in das Getriebe eingeleitete kinetische Energie (Kraft/Druck und zugehöriger Gradient) herangezogen werden.

In beiden Fällen ist gewährleistet, dass die elektromechanische Bremsvorrichtung unterhalb des Aussteuerpunktes der elektromechanischen Bremsvorrichtung eine vorteilhaft hohe Steifigkeit aufweist, während die elektromechanische Bremsvorrichtung vor allem bei durch die Pulsationen der Pumpen bewirkten Druckspitzen während einer Rückförderung sich elastisch verhält. Die zum Charakterisieren der abzumildernden Druckspitzen herangezogenen Werte können je nach Auslegung des Aussteuerpunktes des Bremskraftverstärkers gewählt werden.

Es wird darauf hingewiesen, dass die mittels der mindestens einen elastischen Komponente bewirkbare Dämpfung der sprunghaft ansteigenden Hauptbremszylinderkraft Ftmc auf rein mechanischem Wege realisierbar ist. Somit ist die auf diese Weise sicherstellbare Steigerung der Lebensdauer/Einsetzzeit der elektromechanischen Bremsvorrichtung 10 zu geringen Kosten möglich. Insbesondere kann durch die Ausstattung der elektromechanischen Bremsvorrichtung 10 mit der mindestens einen vorteilhaft ausgebildeten elastischen Komponente 24 auf eine Dämpfung der Druckspitzen mittels einer dazu ausgelegten Software-Komponente verzichtet werden. Da eine derartige Software-Komponente in der Regel ein zeitlich hochaufgelöstes Messen des Innendrucks in dem Hauptbremszylinder 12 und/oder ein schnelles Erkennen eines ABS-Flags erfordert, entfallen diese aufwändigen Messschritte bei einem Einsatz der mindestens einen elastischen Komponente 24. Die mittels der mindestens einen elastischen Komponente 24 realisierte Dämpfung kann somit auf ein Einsetzen von teuren Sensoren, oder auf eine aufwändige (weil ausreichend schnelle) Kommunikation mit einem einen Drucksensor umfassenden Steuergerät, verzichten.

Des Weiteren ist bei der Ausstattung der elektromechanischen Bremsvorrichtung 10 mit der mindestens einen elastischen Komponente verlässlich gewährleistet, dass deren Deformation rechtzeitig und schnell genug auf den sprunghaften Anstieg der Hauptbremszylinderkraft Ftmc erfolgt. Die Probleme der Latenzzeit, welche bei einer herkömmlichen Software-Komponente zum Abfangen von Druckspitzen in dem Hauptbremszylinder 12 auftreten, entfallen damit.

Mittels der vorteilhaften Auslegung der mindestens einen elastischen Komponente 24 ist auch realisierbar, dass während des Auftretens von Druckspitzen in dem Hauptbremszylinder 12 mittels einer Komprimierung der mindestens einen elastischen Komponente 24 eine Kraft derart auf die Eingangsstange 20 der elektromechanischen Bremsvorrichtung 10 übertragbar ist, dass die Eingangsstange 20 in eine von dem Hauptbremszylinder 12 weg gerichtete Richtung verstellbar ist. Der Fahrer spürt somit eine seiner Betätigung des Bremsbetätigungselements 22 entgegenwirkende verstärkte Rückwirkung. In der Regel reagiert der Fahrer in einer derartigen Situation damit, dass er die Fahrerbremskraft Ff reduziert, bzw. ein zumindest leichtes Zurückverstellen des Bremsbetätigungselements 22 auslöst. Bei einer Auslegung der elektromechanischen Bremsvorrichtung 10 als weggeregelter elektromechanischer Bremskraftverstärker 10 löst die Reaktion des Fahrers ein leichtes Zurückdrehen des Rotors des Elektromotors 14 aus, wodurch das Getriebe 18 zusätzlich während des Auftretens der Druckspitzen entspannbar ist. Somit bewirkt die mindestens eine elastische Komponente 24 durch ihre Komprimierung nicht nur eine kurzzeitige Reduzierung des in dem Hauptbremszylinder 12 vorliegenden Innendrucks, sondern auch eine zumindest leichte Zurücknahme des Motorbetriebs des Elektromotors 14. Mittels beider Maßnahmen kann einer durch den sprunghaften Anstieg der Hauptbremszylinderkraft Ftmc ausgelösten Beschädigung der elektromechanischen Bremsvorrichtung 10, insbesondere des Getriebes 18, erfolgreich entgegengewirkt werden.

In der Ausführungsform der Fig. 1 ist die mindestens eine elastische Komponente 24 eine zwischen einem Verstärkerkörper (boost body) 26 des elektromechanischen Bremskraftverstärkers 10 und einem Ventilkörper (valve body) 28 des elektromechanischen Bremskraftverstärkers angeordnete Tellerfeder 24. Die Tellerfeder 24 kann insbesondere zwischen einer zu dem Hauptbremszylinder 12/in eine Einbremsrichtung ausgerichteten ersten Kraftübertragungsfläche 30 des Verstärkerkörpers 26 und einer der ersten Kraftübertragungsfläche 30 zugewandten zweiten Kraftübertragungsfläche 32 des Ventilkörpers 28 angeordnet sein. Die Kraftübertragungsflächen 30 und 32 können als zwei gehärtete Anlaufscheiben mit entsprechender Stärke und Gleitfläche die Tellerfeder 24 tragen, bzw. führen.

Eine Tellerfeder 24 ist eine kostengünstige Ausführungsform für die mindestens eine elastische Komponente 24. Außerdem weist eine Tellerfeder 24 einen vergleichsweise geringen Einbauraumbedarf auf. In der Regel kann auch auf eine Vorspannung der Tellerfeder für ihre Einsetzbarkeit in der mindestens einen elektromechanischen Bremsvorrichtung 10 verzichtet werden. Die Tellerfeder 24 kann speziell für eine vergleichsweise hohe Last ausgelegt sein. Eine Auslegung der Tellerfeder 24 auf die vergleichsweise hohe Last hat in der Regel keine Auswirkung auf das Bremsbetätigungsgefühl (Pedalgefühl) des Fahrers während der Betätigung des Bremsbetätigungselements 22 im Jump-in und unterhalb des Aussteuerpunktes.

Die Tellerfeder 24 kann eine lineare Weg/Kraft-Federkonstante aufweisen. Als Alternative dazu kann die Tellerfeder 24 auch mit einer progressiven Weg/Kraft-Federkonstante ausgebildet sein. Bei einem Durchmesser des Hauptbremszylinders 12 von 25,4 mm und einer Volumenaufnahme der Bremsanlage bei 160 bar von 9,2 cm³ für eine Volumenreduzierung an den Bremsen der Vorderachse und der Hinterachse von 160 bar auf 120 bar (was eine Volumenverschiebung von 1,5 cm³ erforderlich macht), ist ein Weg der Tellerfeder 24 von ca. 2,9 mm ausreichend. Eine derartige Komprimierung der Tellerfeder 24 ist mittels einer kostengünstigen Tellerfeder 24 bereits realisierbar.

Die in Fig. 1 dargestellte elektromechanische Bremsvorrichtung 10 weist zusätzlich zu ihren oben schon beschriebenen Komponenten ein Gehäuse 34 und eine Rückstellfeder 36, mittels welcher sich die Ausgangsstange 16 an dem Gehäuse 34 abstützt, auf. Die Übertragung der Unterstützungskraft Fb von dem Ventilkörper 28 auf die Ausgangsstange 16 erfolgt über eine Reaktionsscheibe 38 der elektromechanischen Bremsvorrichtung 10. Auch die Übertragung der Fahrerbremskraft Ff von der Eingangsstange 20 auf die Ausgangsstange 16 erfolgt über die Reaktionsscheibe 38, wobei eine an einem zu der Ausgangsstange 16 ausgerichteten Ende der Eingangsstange 20 angeordnete Pastille 40, welche durch eine in dem Ventilkörper 28 ausgebildete Öffnung führbar ist, die Reaktionsscheibe 38 berühren kann. Somit kann die über die Ausgangsstange 16 auf mindestens einen verstellbaren Kolben des Hauptbremszylinders 12 übertragene Ausgangskraft Fo eine Summe der Unterstützungskraft Fb und Fahrerbremskraft Ff sein. (Die Ausgangskraft Fo ist in der Regel gleich der Hauptbremszylinderkraft Ftmc.) Entsprechend kann eine von der Ausgangsstange 16 auf die Reaktionsscheibe 38 ausgeübte Gegenkraft Fc eine Summe einer Rückstellkraft Fr der Rückstellfeder 36 und der Ausgangskraft Fo sein. Außerdem kann sich die Eingangsstange 20 mittels einer Zwischenfeder 42 an dem Ventilkörper 28 abstützen. Auch der Verstärkerkörper 26 kann sich mittels einer weiteren Feder 43 an der Eingangsstange 20 abstützen. Die Ausstattung der elektromechanischen Bremsvorrichtung 10 mit den hier aufgezählten Komponenten 34-43 ist jedoch optional.

Des Weiteren kann die elektromechanische Bremsvorrichtung noch mit einem Rotorlagesensor 44 zur Überwachung der Funktionsweise des Elektromotors 14, einem (nicht dargestellten) Wegsensor zum Ermitteln eines Verstellwegs der Eingangsstange 20 aus ihrer unbetätigten Ausgangslage und/oder einem Differenzwegsensor 46 zum Ermitteln eines Differenzwegs zwischen der Eingangsstange 20 und dem Verstärkerkörper 26, ausgestattet sein. Somit können der (absolute) Verstellweg der Eingangsstange 20, ein (absoluter) Verstellweg sb des Verstärkerkörpers 26, der Differenzweg zwischen der Eingangsstange 20 und dem Verstärkerkörper 26 und ein möglicherweise zwischen der Pastille 40 und der Reaktionsscheibe 38 vorliegender Spalt 48 genau einregelbar sein. Die elektromechanische Bremsvorrichtung 10 vereinbart in sich damit die Vorteile einer vorteilhaften geringen Steifigkeit bei einem Auftreten von Druckspitzen in dem Hauptbremszylinder 12, welche vergleichbar zu einem herkömmlichen Unterdruckbremskraftverstärker ist, mit einer gegenüber einem Unterdruckbremskraftverstärker verbesserten Regelbarkeit der Ausgangskraft Fo.

Fig. 2 zeigt eine schematische Darstellung einer zweiten Ausführungsform der elektromechanischen Bremsvorrichtung.

Die in Fig. 2 schematisch dargestellte elektromechanische Bremsvorrichtung 50 ist ebenfalls als ein elektromechanischer Bremskraftverstärker 50 ausgebildet. Als die mindestens eine elastische Komponente 52 bis 58 umfasst die elektromechanische Bremsvorrichtung 50 der Fig. 2 eine Schiebehülse 52, in deren Innenöffnung der Ventilkörper 28 hineinragt. Die Schiebehülse 52 stützt sich an einer von der Ausgangsstange 16 weg gerichteten Seite an einem axial entlang des Ventilkörpers 28 verschiebbaren Ring 54 ab. Eine Verstellbewegung des Rings 54 in eine zu der Ausgangsstange 16 ausgerichtete Verstellrichtung ist jedoch mittels eines an dem Verstärkerkörper 26 befestigten Sicherungsring 56 begrenzt. Außerdem stützt sich der Ring 54 an seiner von der Ausgangsstange 16 weg gerichteten Seite mittels einer vorgespannten Feder 58 von dem Verstärkerkörper 26 ab.

Bei einem regulären Betrieb des elektromechanischen Bremskraftverstärkers 50 erfolgt der Kraftfluss zur Übertragung der Unterstützungskraft Fb durch die vorgespannte Feder 58 hindurch, ohne dass eine Komprimierung der vorgespannten Feder 58 erfolgt. Somit verhält sich die vorgespannte Feder 58 in einer derartigen Situation als passives Element. Deshalb kann die Unterstützungskraft bei einem regulären Betrieb des elektromechanischen Bremskraftverstärkers 50 über den Verstärkerkörper 26, den Sicherungsring 56, die vorgespannte Feder 58, den Ring 54 und die Schiebehülse 52 auf die Reaktionsscheibe 38 geleitet werden. Ein Nachgeben der vorgespannten Feder 58 ist bis zum Aussteuerpunkt der elektromechanischen Bremsvorrichtung 50 auslegungsgemäß unterbunden. Es ergeben sich keine Änderungen der auf den mindestens einen Kolben 60 des Hauptbremszylinders 12 übertragenen Ausgangskraft oder des Verstellwegs der Ausgangsstange 16 aufgrund der zusätzlichen Ausstattung der elektromechanischen Bremsvorrichtung 50 mit den Komponenten 52 bis 58.

Allerdings können Druckspitzen im Hauptbremszylinder 12 auftreten. Beispielsweise kann bei einem Erkennen eines erhöhten Radschlupfes eines oder mehrerer Räder ein Druckabbau in mindestens einem an dem Hauptbremszylinder 12 hydraulisch angebundenen Radbremszylinder mittels eines Schließens mindestens eines zugeordneten Einlassventils und eines Öffnens mindestens eines zugeordneten Auslassventils ausgeführt werden. Auf diese Weise ist Bremsflüssigkeit aus dem mindestens einen Radbremszylinder in die mindestens eine Speicherkammer mindestens eines an dem Hauptbremszylinder 12 angebundenen Bremskreises ablassbar, so dass eine Blockierung mindestens eines Rades aufhebbar ist. Um den Volumenhaushalt in dem mindestens einen Bremskreis zu stabilisieren, kann mittels mindestens einer Rückförderpumpe das zuvor abgelassene Volumen aus der mindestens einen Speicherkammer in den Hauptbremszylinder 12 gepumpt werden. Dies kann ein sprunghaftes Ansteigen des in dem Hauptbremszylinder 12 vorliegenden Innendrucks bewirken.

Durch das starke Ansteigen des in dem Hauptbremszylinder vorliegenden Innendrucks wird das "normale" Unterstützungskraftniveau überschritten. Eine sprungförmige Erhöhung der Hauptbremszylinderkraft führt in diesem Fall zu einem deutlich gesteigerten Druck des Rings 54 gegen die vorgespannte Feder 58, und schließlich zu einem Nachgeben der vorgespannten Feder 58. Der Ring 54 wird dabei axial weg von der Ausgangsstange 16 verschoben, was zu einer Verbiegung der Sicherungshülse 52 führt. (Die Lage des Sicherungsrings 56 verändert sich aufgrund der Trägheit des Verstärkerkörpers 26 in einer derartigen Situation nicht, jedoch kann die Schiebehülse 52 an einem zu dem Sicherungsring 56 zugewandten Ende eine Nut 62 aufweisen.)

Durch das Nachgeben der vorgespannten Feder 58, bzw. die Verbiegung der Sicherungshülse 52, kann eine Gesamtsteifigkeit der elektromechanischen Bremsvorrichtung 50 zumindest kurzzeitig gesenkt werden. Somit kann trotz einer erhöhten Massenträgheit der elektromechanischen Bremsvorrichtung 50 (im Vergleich zu einem Unterdruck-Bremskraftverstärker) kurzzeitig Volumen gewonnen werden, wodurch der Innendruck im Hauptbremszylinder 12 leicht absenkbar ist.

Außerdem wird durch das Nachgeben der vorgespannten Feder 58, bzw. die Verbiegung der Sicherungshülse 52, ein erhöhter Kraftanteil über die Eingangsstange 20 an das Bremsbetätigungselement übertragen. (Eine Abstützung der Reaktionsscheibe 38 gibt in einer derartigen Situation etwas nach.) Der Fahrer spürt somit an dem Bremsbetätigungselement eine verstärkte Gegenkraft und reduziert in der Regel als Reaktion darauf die Bremsbetätigung. Die Reaktion des Fahrers wiederum löst ein geringfügiges Zurückfahren des Verstärkerkörpers 26 mittels des weggesteuerten Elektromotors 14 aus, wodurch der in dem Hauptbremszylinder 12 vorliegende Innendruck zusätzlich leicht reduzierbar und das Getriebe 18 weiter entlastbar sind.

Mittels der elastischen Komponenten 52 bis 58 kann damit verhindert werden, dass bei Druckspitzen in dem Hauptbremszylinder 12 signifikante Belastungen im Getriebe 18 auftreten. Stattdessen kann über ein Nachgeben/eine Komprimierung der vorgespannten Feder 58 die Rückwirkung der Druckspitzen auf das Getriebe 18 gedämpft werden. Somit kann trotz eines Einsatzes eines Getriebes 18 mit einer hohen Steifigkeit dessen Beschädigung bei Druckspitzen in dem Hauptbremszylinder 12 verhindert werden. Damit ist auch ein kostengünstiges Getriebe 18 für die elektromechanische Bremsvorrichtung 50 einsetzbar. Außerdem kann eine Zahnreihe an dem Verstärkerkörper 26 aus einem kostengünstigen Kunststoff ausgebildet sein, ohne dass eine Beschädigung der Zahnreihe zu befürchten ist.

Die Vorspannung der vorgespannten Feder 58 wird vorzugsweise so gewählt, dass die Vorspannungskraft die maximale Unterstützungskraft gerade ein wenig übersteigt. Auf diese Weise ist gewährleistbar, dass bei einer langsamen Bremsbetätigung durch den Fahrer der Innendruck in dem Hauptbremszylinder 12 auch über das Niveau des Aussteuerpunktes ansteigen kann. Zwar ist die maximal bereitstellbare Unterstützungskraft durch den Aussteuerpunkt limitiert, jedoch kann der Fahrer noch den im Hauptbremszylinder 12 vorliegenden Innendruck durch eine verstärkte Fahrerbremskraft steigern. Die vorgespannte Feder 58 gibt in einer derartigen Situation nicht nach.

Vorzugsweise ist zumindest ein Innenteil des Verstärkerkörpers 26 aus Metall ausgeführt. Die Schiebehülse 52 kann aus Kunststoff bestehen. Für den Ring 54 und die vorgespannte Feder wird Stahl bevorzugt. Die entstehenden Mehrkosten des Verstärkerkörpers 56 können jedoch durch ein kostengünstigeres einsetzbares Getriebe 18 ausgeglichen werden.

In den oberen Ausführungsformen sind die elektromechanischen Bremsvorrichtungen 10 und 50 als elektromechanische Bremskraftverstärker ausgebildet. Als Alternative dazu kann eine vorteilhafte elektromechanische Bremsvorrichtung auch als automatische Einbremsvorrichtung und/oder Fremdkraftbremsvorrichtung, beispielsweise für ein ACC-System, ausgebildet sein.

Die oben ausgeführten Vorteile sind auch bei einem Bremssystem für ein Fahrzeug mit einer derartigen elektromechanischen Bremsvorrichtung 10 und 50 und einem Hauptbremszylinder 12 realisiert.

## Patentansprüche

1. Elektromechanische Bremsvorrichtung (10, 50) für ein Bremssystem mit einem Hauptbremszylinder (12) mit:
einem Elektromotor (14);
einer verstellbaren Ausgangsstange (16), welche derart an dem Hauptbremszylinder (12) anordbar ist, dass mindestens ein Kolben (60) des Hauptbremszylinders (12) mittels der verstellten Ausgangsstange (12) mitverstellbar ist;
einem Getriebe (18) und einem Ventilkörper (28), wobei der Elektromotor (14) mit der Ausgangsstange (16) zumindest über das Getriebe (18) und den Ventilkörper (28) so verbunden ist, dass ein Kraftübertragungspfad vorliegt, über welchen eine von dem Elektromotor (14) aufgebrachte Motorkraft (Fb) zumindest teilweise so auf die Ausgangsstange (16) übertragbar ist, dass die Ausgangsstange (16) mittels der zumindest teilweise übertragenen Motorkraft (Fb) verstellbar ist; und
einer in dem Kraftübertragungspfad angeordnete Reaktionsscheibe (38), wobei eine Übertragung der Motorkraft (Fb) von dem Ventilkörper (28) auf die Ausgangsstange (16) über die Reaktionsscheibe (38) erfolgt;
**dadurch gekennzeichnet, dass**
die elektromechanische Bremsvorrichtung (10, 50) zusätzlich zu der Reaktionsscheibe (38) noch mindestens eine innerhalb des Kraftübertragungspfades angeordnete elastische Komponente (24, 52 bis 58) umfasst, welche derart ausgebildet ist, dass die mindestens eine elastische Komponente (24, 52 bis 58) unterhalb eines Aussteuerpunktes der elektromechanischen Bremsvorrichtung (10, 50) nicht komprimierbar ist, während jedoch bei einem Auftreten von Druckspitzen in dem Hauptbremszylinder (12) oberhalb des Aussteuerpunktes der elektromechanischen Bremsvorrichtung (10, 50) die mindestens eine elastische Komponente (24, 52 bis 58) komprimierbar ist.

2. Elektromechanische Bremsvorrichtung (10, 50) nach Anspruch 1, wobei die Druckspitzen in dem Hauptbremszylinder (12), ab welchen die mindestens eine elastische Komponente (24, 52 bis 58) komprimierbar ist, oberhalb von einem vorgegebenen Schwellwert liegen und/oder einer vorgegebenen Mindest-Drucksteigerung innerhalt eines vorgegebenen Zeitintervalls entsprechen.

3. Elektromechanische Bremsvorrichtung (10, 50) nach Anspruch 1 oder 2, wobei die elektromechanische Bremsvorrichtung (10, 50) als automatische Einbremsvorrichtung und/oder Fremdkraftbremsvorrichtung ausgebildet ist.

4. Elektromechanische Bremsvorrichtung (10, 50) nach Anspruch 1 oder 2, wobei die elektromechanische Bremsvorrichtung (10, 50) als elektromechanischer Bremskraftverstärker (10, 50) ausgebildet ist.

5. Elektromechanische Bremsvorrichtung (10, 50) nach Anspruch 4, wobei die elektromechanischen Bremsvorrichtung (10, 50) zusätzlich noch eine Eingangsstange (20) umfasst, wobei eine Übertragung einer Fahrerbremskraft von der Eingangsstange (20) auf die Ausgangsstange (16) über die Reaktionsscheibe (38) erfolgt, und wobei mittels einer Komprimierung der mindestens einen elastischen Komponente (24, 52 bis 58) während des Auftretens von Druckspitzen in dem Hauptbremszylinder (12) eine Kraft derart auf die Eingangsstange (20) übertragbar ist, dass die Eingangsstange (20) in eine von dem Hauptbremszylinder (12) weg gerichtete Richtung verstellbar ist.

6. Elektromechanische Bremsvorrichtung (10) nach Anspruch 4 oder 5, wobei die mindestens eine elastische Komponente (24) eine zwischen einem Verstärkerkörper (26) des elektromechanischen Bremskraftverstärkers (10) und dem Ventilkörper (28) angeordnete Tellerfeder (24) umfasst.

7. Elektromechanische Bremsvorrichtung (10) nach Anspruch 6, wobei die Tellerfeder (24) eine lineare Weg/Kraft-Federkonstante aufweist.

8. Elektromechanische Bremsvorrichtung (10) nach Anspruch 6, wobei die Tellerfeder (24) eine progressive Weg/Kraft-Federkonstante aufweist.

9. Elektromechanische Bremsvorrichtung (50) nach Anspruch 4 oder 5, wobei die mindestens eine elastische Komponente (52 bis 58) eine Schiebehülse (52) umfasst, in deren Innenöffnung der Ventilkörper (28) des elektromechanischen Bremskraftverstärkers (50) hineinragt.

10. Elektromechanische Bremsvorrichtung (50) nach Anspruch 9, wobei sich die Schiebehülse (52) an ihrer von der Ausgangsstange (16) weg gerichteten Seite an einem Ring (54) abstützt, und wobei eine Verstellbewegung des Rings (54) in eine zu der Ausgangsstange (16) ausgerichteten Verstellrichtung mittels eines an dem Verstärkerkörper (26) des elektromechanischen Bremskraftverstärkers (50) befestigten Sicherungsrings (56) begrenzt ist, und der Ring (54) sich an seiner von der Ausgangsstange (16) weg gerichteten Seite mittels einer vorgespannten Feder (58) von dem Verstärkerkörper (26) abstützt.

11. Bremssystem für ein Fahrzeug mit einer elektromechanischen Bremsvorrichtung (10, 50) nach einem der vorhergehenden Ansprüche und einem Hauptbremszylinder (12).

## Claims

1. Electromechanical brake device (10, 50) for a brake system having a master brake cylinder (12), having:
an electric motor (14);
an adjustable output rod (16) which is arrangeable on the master brake cylinder (12) such that at least one piston (60) of the master brake cylinder (12) is jointly adjustable by means of the adjusted output rod (12),
a gearing (18) and a valve body (28), wherein the electric motor (14) is connected to the output rod (16) at least via the gearing (18) and the valve body (28) such that there is a force transmission path via which a motor force (Fb) imparted by the electric motor (14) is at least partially transmissible to the output rod (16) such that the output rod (16) is adjustable by means of the at least partially transmitted motor force (Fb); and a reaction disc (38) which is arranged in the force transmission path, wherein a transmission of the motor force (Fb) from the valve body (28) to the output rod (16) takes place via the reaction disc (38) ;
**characterized in that**
the electromechanical brake device (10, 50) also comprises, in addition to the reaction disc (38), at least one elastic component (24, 52 to 58) which is arranged within the force transmission path and which is designed such that the at least one elastic component (24, 52 to 58) is not compressible below a run-out point of the electromechanical brake device (10, 50), whereas the at least one elastic component (24, 52 to 58) is however compressible in the event of pressure peaks above the run-out point of the electromechanical brake device (10, 50) occurring in the master brake cylinder (12).

2. Electromechanical brake device (10, 50) according to Claim 1, wherein the pressure peaks in the master brake cylinder (12) proceeding from which the at least one elastic component (24, 52 to 58) is compressible lie above a predefined threshold value and/or correspond to a predefined minimum pressure increase within a predefined time interval.

3. Electromechanical brake device (10, 50) according to Claim 1 or 2, wherein the electromechanical brake device (10, 50) is designed as an automatic braking device and/or power brake device.

4. Electromechanical brake device (10, 50) according to Claim 1 or 2, wherein the electromechanical brake device (10, 50) is designed as an electromechanical brake booster (10, 50).

5. Electromechanical brake device (10, 50) according to Claim 4, wherein the electromechanical brake device (10, 50) additionally comprises an input rod (20), wherein a transmission of a driver-imparted braking force from the input rod (20) to the output rod (16) takes place via the reaction disc (38), and wherein, by means of a compression of the at least one elastic component (24, 52 to 58) during the occurrence of pressure peaks in the master brake cylinder (12), a force is transmissible to the input rod (20) such that the input rod (20) is adjustable in a direction pointing away from the master brake cylinder (12).

6. Electromechanical brake device (10) according to Claim 4 or 5, wherein the at least one elastic component (24) comprises a plate spring (24) which is arranged between a booster body (26) of the electromechanical brake booster (10) and the valve body (28).

7. Electromechanical brake device (10) according to Claim 6, wherein the plate spring (24) has a linear travel/force spring constant.

8. Electromechanical brake device (10) according to Claim 6, wherein the plate spring (24) has a progressive travel/force spring constant.

9. Electromechanical brake device (50) according to Claim 4 or 5, wherein the at least one elastic component (52 to 58) comprises a sliding sleeve (52), into the internal opening of which the valve body (28) of the electromechanical brake booster (50) projects.

10. Electromechanical brake device (50) according to Claim 9, wherein the sliding sleeve (52) is supported, at its side pointing away from the output rod (16), on a ring (54), and wherein an adjustment movement of the ring (54) in an adjustment direction oriented toward the output rod (16) is limited by means of a securing ring (56) which is fastened on the booster body (26) of the electromechanical brake booster (50), and the ring (54) is supported, at its side pointing away from the output rod (16), by the booster body (26) via a preloaded spring (58).

11. Brake system for a vehicle having an electromechanical brake device (10, 50) according to one of the preceding claims and having a master brake cylinder (12).

## Revendications

1. Dispositif de freinage électromécanique (10, 50) pour un système de freinage comprenant un maître-cylindre principal (12), comprenant :
un moteur électrique (14) ;
une tige de sortie réglable (16) qui peut être disposée sur le maître-cylindre principal (12) de telle sorte qu'au moins un piston (60) du maître-cylindre principal (12) soit réglé conjointement au moyen de la tige de sortie réglée (12) ;
une transmission (18) et un corps de soupape (28), le moteur électrique (14) étant connecté à la tige de sortie (16) au moins par le biais de la transmission (18) et du corps de soupape (28) de telle sorte qu'un chemin de transfert de force soit produit, par le biais duquel une force de moteur (Fb) appliquée par le moteur électrique (14) puisse être transmise au moins en partie à la tige de sortie (16) de telle sorte que la tige de sortie (16) puisse être réglée au moyen de la force de moteur (Fb) au moins en partie transmise ; et
un disque de réaction (38) disposé dans le chemin de transfert de force, un transfert de la force de moteur (Fb) du corps de soupape (28) à la tige de sortie (16) s'effectuant par le biais du disque de réaction (38) ;
**caractérisé en ce que**
le dispositif de freinage électromécanique (10, 50) comprend, en plus du disque de réaction (38), encore au moins un composant élastique (24, 52 à 58), disposé à l'intérieur du chemin de transfert de force, qui est réalisé de telle sorte que l'au moins un composant élastique (24, 52 à 58) ne puisse pas être comprimé en dessous d'un point de réglage du dispositif de freinage électromécanique (10, 50), tandis que dans le cas de l'apparition de pointes de pression dans le maître-cylindre principal (12), au-dessus du point de réglage du dispositif de freinage électromécanique (10, 50), l'au moins un composant élastique (24, 52 à 58) peut être comprimé.

2. Dispositif de freinage électromécanique (10, 50) selon la revendication 1, dans lequel les pointes de pression dans le maître-cylindre principal (12), à partir desquelles l'au moins un composant élastique (24, 52 à 58) peut être comprimé, se situent au-dessus d'une valeur seuil prédéfinie, et/ou correspondent à une augmentation de pression minimale prédéfinie à l'intérieur d'un intervalle de temps prédéfini.

3. Dispositif de freinage électromécanique (10, 50) selon la revendication 1 ou 2, le dispositif de freinage électromécanique (10, 50) étant réalisé sous forme de dispositif automatique de rodage de frein et/ou de freinage à force extérieure.

4. Dispositif de freinage électromécanique (10, 50) selon la revendication 1 ou 2, le dispositif de freinage électromécanique (10, 50) étant réalisé sous la forme d'un servofrein électromécanique (10, 50).

5. Dispositif de freinage électromécanique (10, 50) selon la revendication 4, le dispositif de freinage électromécanique (10, 50) comprenant en outre encore une tige d'entrée (20), un transfert d'une force de freinage du conducteur de la tige d'entrée (20) à la tige de sortie (16) s'effectuant par le biais du disque de réaction (38), et une force pouvant être transmise à la tige d'entrée (20) au moyen d'une compression de l'au moins un composant élastique (24, 52 à 58) au cours de l'apparition de pointes de pression dans le maître-cylindre principal (12), de telle sorte que la tige d'entrée (20) puisse être réglée dans une direction orientée à l'écart du maître-cylindre principal (12).

6. Dispositif de freinage électromécanique (10) selon la revendication 4 ou 5, dans lequel l'au moins un composant élastique (24) comprend un ressort à coupelle (24) disposé entre un corps de servofrein (26) du servofrein électromécanique (10) et le corps de soupape (28).

7. Dispositif de freinage électromécanique (10) selon la revendication 6, dans lequel le ressort à coupelle (24) présente une constante de rappel de course/force linéaire.

8. Dispositif de freinage électromécanique (10) selon la revendication 6, dans lequel le ressort à coupelle (24) présente une constante de rappel de course/force progressive.

9. Dispositif de freinage électromécanique (50) selon la revendication 4 ou 5, dans lequel l'au moins un composant élastique (52 à 58) comprend un manchon coulissant (52) dans l'ouverture interne duquel pénètre le corps de soupape (28) du servofrein électromécanique (50).

10. Dispositif de freinage électromécanique (50) selon la revendication 9, dans lequel le manchon coulissant (52) s'appuie contre une bague (54) au niveau de son côté opposé à la tige de sortie (16) et dans lequel un mouvement de réglage de la bague (54) dans une direction de réglage orientée vers la tige de sortie (16) est limité au moyen d'une bague de fixation (56) fixée au corps de servofrein (26) du servofrein électromécanique (50), et la bague (54) s'appuie au niveau de son côté orienté à l'écart de la tige de sortie (16) au moyen d'un ressort précontraint (58) à partir du corps de servofrein (26).

11. Système de freinage pour un véhicule comprenant un dispositif de freinage électromécanique (10, 50) selon l'une quelconque des revendications précédentes et un maître-cylindre principal (12).
